# EUROPÄISCHE PATENTSCHRIFT

(11) **EP 0 477 478 B1**
(45) Veröffentlichungstag und Bekanntmachung des Hinweises auf die Patenterteilung: **13.04.1994**
(21) Anmeldenummer: 91110465.1
(22) Anmeldetag: 25.06.1991
(51) Int. Cl.: B65D 67/00, D04D 7/10

(54) **Dekorationsmittel**
Decorative material
Matière décorative

(30) Priorität: 28.09.1990 DE 9013653 U
(43) Veröffentlichungstag der Anmeldung: 01.04.1992
(73) Patentinhaber: L.H.A. MANS HOLDING B.V., NL-6166 GV Geleen (NL)
(72) Erfinder: Mans, Leonardus Hubertus Antonius, NL-6166 GV Geleen (NL)
(74) Vertreter: Mayer-Pohske, Joachim-Wolfgang Rechtsanwälte Dr. Dettmeier & Partner

(56) Entgegenhaltungen:
- EP-A- 0 126 827
- WO-A-86/06115
- DE-U- 9 100 705

## Beschreibung

Die Erfindung betrifft zeitlich begrenzt verwendbare Dekorationsmittel wie Kränze, Verpackungen oder dergl., ausgestattet mit mindestens einem Zierband.

Zeitlich begrenzt verwendbare Dekorationsmittel der genannten Art sind weit verbreitet in der Anwendung und damit hinreichend bekannt. Solche Dekorationsmittel wie Pappkartons oder Kränze sind mit weiteren Zierbändern dekorativ verziert. Nach dem Auspacken des verpackten Gegenstandes wird die Packung weggeworfen. Solche Packungen sind heute vielfach aus verrottbarem Material wie Pappe und daher problemlos entsorgbar. Die verwendeten Zierbänder sind häufig nicht verrottbar und müssen daher auf andere Art und Weise aufwendig entsorgt werden. Ein gleiches Problem tritt bei den auf Friedhöfen verwendeten Kränzen mit den daran befindlichen Zierbändern auf. Nach einiger Zeit sind die Kränze verrottet, und es müssen die unverrottbaren Zierbänder gesondert entsorgt werden. Die Verwendung von verrottbaren Textilien, die ein entsprechend dekoratives Aussehen haben müssen, ist für den kurzen Einsatz zu teuer.

Es ist weiterhin ein Vlies bekannt und im Handel, das in seiner Zusamensetzung so aufgebaut ist, daß es verrottbar ist. Aus solchen Vliesen werden z.B. Wegwerf-Tischdecken angefertigt.

Der Erfindung liegt somit die Aufgabe zugrunde, ein mindestens ein Zierband aufweisendes, preisgünstiges Dekorationsmittel vorzuschlagen, das problemlos entsorgt werden kann.

Diese Aufgabe ist ausgehend von einem Dekorationsmittel der eingangs beschriebenen Art dadurch gelöst, daß das Zierband aus einem verrottbaren Vlies besteht. Es kommt hier also das an sich bereits bekannte verrottbare Vlies zum Einsatz, das in der Form von Zierbändern zugeschnitten werden muß und so außerordentlich preisgünstig ist. Es ist darüber hinaus sehr leicht dekorativ zu färben und zu bedrucken, so daß die mit solchen Bändern gewünschten Dekorationseffekte problemlos und billig erreichbar sind. Die Zierbänder aus Vlies können auch zusammen mit dem Grundgegenstand, also z.B. mit dem Karton oder dem Kranz, entsorgt werden und benötigen keine gesonderte Behandlung. Sie sind gleichzeitig ausreichend fest und beständig, um wie ein Zierband handhabbar und verwendbar zu sein.

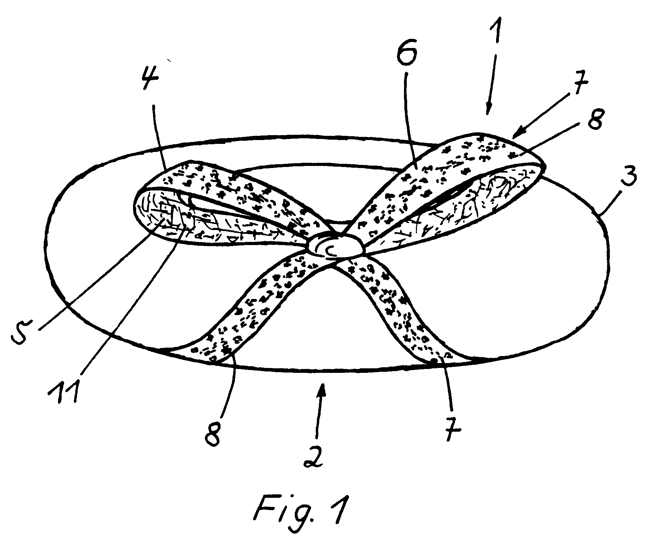

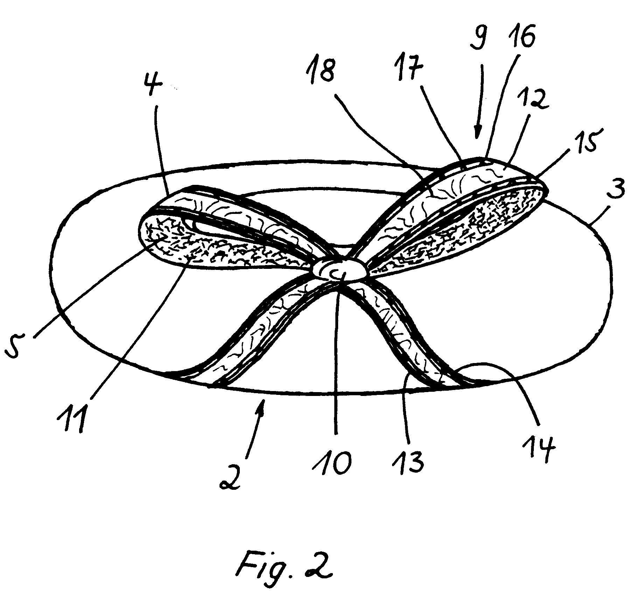

Nachfolgend soll die Erfindung anhand der beiden Zeichnungen, die sich lediglich in der Oberflächengestaltung des Zierbandes unterscheiden, näher erläutert werden. In den Figuren 1 und 2 ist als Dekorationsmittel ein Kranz gezeigt, dessen Dekorationswirkung von einem daran angeordneten Zierband 1 unterstrichen wird. Das Zierband 1 der Figur 1 ist zu einer Schleife 2 um Teile dieses Kranzes 3 geschlungen. Das Zierband 1 besteht aus einem verrottbaren Vlies 4, welches auf der nicht eingefärbten Unterseite 5 des Zierbandes 1 anhand seiner in Wirrlage orientierten Fasern 11 erkennbar ist. Die Oberseite 6 des Zierbandes 1 kann sowohl eingefärbt sein, was in der Figur 1 nicht darstellbar ist, als auch mit einem Muster 7 bedruckt sein. Zusätzlich zu dem bedruckten Muster 7 sind z.B. Sternchen 8 verteilt angeordnet vorgesehen. Diese Musterung kann aufgedruckt aber auch aufgelegt sein. Das aufgelegte Material kann hierbei ebenfalls verrottbar, vorzugsweise entsprechend eingefärbtes verrottbares Vlies sein.

Das Zierband 9 der Figur 2 ist ebenfalls als Schleife 2 um einen Kranz 3 geschlungen. Die Schleife 2 weist in der Mitte einen Knoten 10 auf. Auch das Zierband 9 besteht aus einem verrottbaren Vlies 4, welches an den in Wirrlage orientierten Fasern 11 seiner Unterseite 5 gut zu erkennen ist. Im Gegensatz zum Zierband 1 der Figur 1 sind sowohl die Oberseite 12 als auch die Unterseite 5 einheitlich in der gleichen Farbe eingefärbt, d.h., das Zierband 9 ist durchgefärbt. Auf der Oberseite 12 weist das Zierband 9 zu beiden seitlichen Rändern 13 und 14 je einen aufgelegten oder eingefärbten durchlaufenden Goldstreifen 15 und 16 auf. Die Goldstreifen 15 und 16 werden abschnittsweise z.B. von Sternchen 17 unterteilt. Zwischen den beiden durchlaufenden Streifen 15 und 16 ist eine Äderung 18 schwach angedeutet.

Es ist somit zu erkennen, daß die herkömmlichen unverrottbaren Zierbänder mit all ihren dekorativen Effekten problemlos von einem zu einem Zierband geschnittenen verrottbaren Vlies ersetzt werden können. Das erfindungsgemäße Zierband ist natürlich nicht auf die dargestellte Anwendung an Kränzen beschränkt.

## Patentansprüche

1. Zeitlich begrenzt verwendbare Dekorationsmittel wie Kränze, Verpackungen, Zierbanddekorationen oder dergl., mit mindestens einem Zierband (1;9), dadurch gekennzeichnet, daß das Zierband aus einem verrottbaren Vlies besteht.

2. Dekorationsmittel nach Anspruch 1, dadurch gekennzeichnet, daß das Vlies Kunststoffasern enthält, die biologisch abbaubar sind.

3. Dekorationsmittel nach Anspruch 2, dadurch gekennzeichnet, daß der Kunststoff ein Polyhydroxybutyrat ist.

4. Dekorationsmittel nach einem der Ansprüche 1 bis 3, dadurch gekennzeichnet, daß wenigstens eine Seite (5,6,12) des Zierbandes (1,9) wenigstens teilweise mit einem Farbstoff gefärbt ist.

5. Zierband nach einem der Ansprüche 1 bis 4, dadurch gekennzeichnet, daß wenigstens eine Seite (5,6,12) des Zierbandes (1,9) mit einem Gold- oder Silberstreifen (15) versehen ist.

## Claims

1. Decoration items of limited usage such as garlands, wrappings, ribbon decorations and so on with at least one ribbon (1.9), characterized by the fact that the ribbon consists of a degradable fleece or non-woven-material.

2. Decoration items in accordance with claim 1, characterized by the fact that the fleece or non-woven-material contains biologically degradable synthetic fibres.

3. Decoration items in accordance with claim 2, characterized by the fact that synthetic material is a polyhydroxybutyrate.

4. Decoration items in accordance with claims 1 till 3, characterized by the fact that in any case at least one side (5,6,12,) of the ribbon (1,9) is partly dyed with some colouring agent.

5. Ribbon in accordance with one of claims 1 till 4, characterized by the fact that at least one side (5,6,12) of the ribbon (1,9) is completed with a golden or silver stripe (15).

## Revendications

1. Articles de décoration à utilisation limitée tels que les couronnes, emballages, bandes décoratives et autres avec un minimum d'une bande décorative (1-9), caractérisée par le fait qu'il s'agit d'une bande décorative d' une toison ou non-tissé périssable.

2. Articles de décoration selon la revendication 1, caractérisé par le fait que la toison ou non-tissée contient des fibres synthétiques autobiodégradables.

3. Articles de décorations selon la revendication 2, caractérisés par le fait que le plastique est un polyhydroxybutyrate.

4. Articles de décorations selon l'une des revendications 1 à 3, caractérisé par le fait qu'un coté au minimum (5,6,12) de la bande décorative (1,9) est teint en tout cas en partie avec un colorant.

5. Bande décorative selon l'une des revendications 1 à 4, caractérisé par le fait qu'un coté au minimum (5,6,12) de la bande décorative (1,9) est pourvu d'une ligne dorée ou argentée (15).
